Europäisches Patentamt

European Patent Office

Office européen des brevets

(19)

(11) Veröffentlichungsnummer: **0 105 118**
**B1**

(12) **EUROPÄISCHE PATENTSCHRIFT**

(45) Veröffentlichungstag der Patentschrift:
12.03.86

(21) Anmeldenummer: 83107547.8

(22) Anmeldetag: 01.08.83

(51) Int. Cl.⁴: **B 60 T 13/68**, B 60 T 15/16,
B 60 T 17/18, B 60 T 17/22

(54) Elektropneumatische Steuereinrichtung für die Druckluftbremsen von Schienenfahrzeugen.

<table>
<tr><td>(30) Priorität: 03.09.82 DE 3232836</td><td>(73) Patentinhaber: <b>KNORR-BREMSE AG, Moosacher Strasse 80 Postfach 401060, D-8000 München 40 (DE)</b></td></tr>
<tr><td>(43) Veröffentlichungstag der Anmeldung:<br>11.04.84 Patentblatt 84/15</td><td rowspan="2">(72) Erfinder: <b>Krause, Friedrich, Ehlerstrasse 4, D-8000 München 90 (DE)</b><br>Erfinder: <b>Pöllinger, Hans, Rainfarnstrasse 65, D-8000 München 45 (DE)</b></td></tr>
<tr><td>(45) Bekanntmachung des Hinweises auf die Patenterteilung:<br>12.03.86 Patentblatt 86/11</td></tr>
<tr><td>(84) Benannte Vertragsstaaten:<br><b>CH DE FR GB LI SE</b></td></tr>
<tr><td>(56) Entgegenhaltungen:<br><b>DE - A - 3 002 001<br>DE - B - 1 160 490<br>DE - B - 2 845 311<br>US - A - 2 573 442<br>US - A - 3 901 558</b></td></tr>
</table>

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung bezieht sich auf eine elektropneumatische Steuereinrichtung für die Druckluftbremsen von Schienenfahrzeugen, mit den Druck in einem Steuerbehälter steuernden, willkürlich schaltbaren Magnetventilen, einen vom Druck im Steuerbehälter entgegen dem Druck in einer Hauptluftleitung gesteuerten, den Druck in der Hauptluftleitung überwachenden Relaisventil, einem einen Druckluftspeiseanschluss, einen Entlüftungsanschluss und einen Bremsdruckanschluss aufweisenden Zusatzbremsventil, und einer Umschaltvorrichtung mit drei gemeinsam schaltbaren Wechselventilen, die in ihrer Normal-Schaltstellung bzw. einer bei Ausfall der Magnetventile einzustellenden Not-Schaltstellung den Druckluftspeiseanschluss mit einer, ggf. druckbegrenzten, Druckluftquelle bzw. der Atmosphäre, den Entlüftungsanschluss mit der Atmosphäre bzw. einer, ggf. druckbegrenzten, Druckluftquelle und den Bremsdruckanschluss direkt oder über ein Bremsdruck-Relaisventil indirekt mit einem Bremszylinder bzw. direkt oder über das Relaisventil indirekt mit der Hauptluftleitung verbinden.

Eine den vorstehend genannten merkmalen entsprechende Steuereinrichtung ist der DE-B Nr. 2845311 entnehmbar. Bei Verwendung eines üblichen Relaisventils weist die Umschaltvorrichtung wenigstens drei als gesondert anzuordnende Dreiwegehähne ausgebildete Wechselventile auf, die über ein gemeinsames Betätigungsgestänge schaltbar sind. Um unabhängig von der Ausbildung der Magnetventile eine sichere Funktion zu gewährleisten, ist im Normalfall noch ein vierter Dreiwegehahn vorgesehen, welcher je nach Ausführung der Steuervorrichtung mit direkter oder über das Relaisventil erfolgender Steuerung des Hauptluftleitungsdruckes in der Not-Schaltstellung durch das Zusatzbremsventil eine Absperrung oder eine Abschaltung des Relaisventils gewährleistet. Die vielen Dreiwegehähne erfordern einen relativ hohen Herstellungs- und Montageaufwand, insbesondere auch hinsichtlich der Rohrleitungsanschlüsse sowie der gemeinsamen Betätigungseinrichtung. Zum Vermindern dieses Aufwandes ist es aus der gleichen Druckschrift auch bekannt, unter Inkaufnahme einer besonderen Relaisventil-Konktruktion mit einem Zusatzkolben die Steuereinrichtung derart auszubilden, dass lediglich zwei gesonderte, jedoch gemeinsam betätigbare Dreiwegehähne erforderlich sind. In dieser Ausführung stellt jedoch die besondere Relaisventil-Konktruktion ein aufwendiges und teueres Sonderbauteil dar.

Der genannten Druckschrift ist weiterhin entnehmbar, dass für das Relaisventil eine Absperrmöglichkeit durch Entlüften einer in ihrer Druckführung durch ein Magnetventil mit Entlüftung und den vierten Dreiwegehahn überwachten Absperrleitung bekannt ist.

Der DE-B Nr. 3002001 ist ein Führerbremsventil entnehmbar, wobei ein das Relaisventil steuernder Steuerbehälter über ein Lösemagnetventil mit einer ggf. auf die Regeldruckhöhe in der Hauptluftleitung durch einen Druckbegrenzer begrenzten Druckluftquelle und über ein Bremsmagnetventil mit einem Entlüftungsraum verbindbar ist. Dem Lösemagnetventil ist dabei ein Sicherungsventil zugeordnet, welches im Bremszustand durch Zwischenordnen eines entlüfteten Zwischenraumes zwischen die Druckluftquelle und den Steuerbehälter einen ungewollten Druckanstieg in letzterem auch bei undichten Ventilen ausschliesst. Dem Bremsmagnetventil ist ein Durchgangsventil und ein Stufenventil zugeordnet; das Durchgangsventil begrenzt die durch das Bremsmagnetventil einsteuerbare Druckabsenkung für den Steuerbehälter auf einen eine Vollbremsung bewirkenden Restdruck, und das mit wesentlichen Teilen dem ständig über eine Düse entlüfteten Entlüftungsraum zugeordnete Stufenventil stellt zu Bremsbeginn ein sicheres Erreichen der ersten Bremsstufe sicher.

Der Erfindung liegt die Aufgabe zugrunde, eine Steuereinrichtung der eingangs genannten Art derart auszubilden, dass sie keine Vielzahl von räumlich getrennt anzuordnenden Dreiwegeventilen oder eine gesonderte Relaisventilkonstruktion erfordert und somit einfach und billig herstellbar ist, geringe Wartung erfordert und eine leichte Bedienung ermöglicht.

Diese Aufgabe wird nach der Erfindung dadurch gelöst, dass die drei Wechselventile zu einem Rundschieberventil mit einem gemeinsamen, in einem Gehäuse in zwei Schaltstellungen einstellbaren Rundschieber zusammengefasst sind, wobei der Rundschieber durch einen Kolben bewegbar ist, dessen Druckluftbeaufschlagung willkürlich vermittels eines Umstellhahnes steuerbar ist. Hierdurch bietet sich die Möglichkeit, den klein und leicht betätigbar ausbildbaren und zudem nur wenige Anschlüsse erfordernden Umstellhahn an geeigneter, gut zugänglicher Stelle anzuordnen und das Rundschieberventil vom Umstellhahn getrennt an einer ebenfalls zu seiner Unterbringung und zu seinem Anschluss geeigneten Stelle zu montieren.

Den Unteransprüchen sind nach der weiteren Erfindung zweckmässige Ausbildungsmöglichkeiten für die Steuereinrichtung entnehmbar.

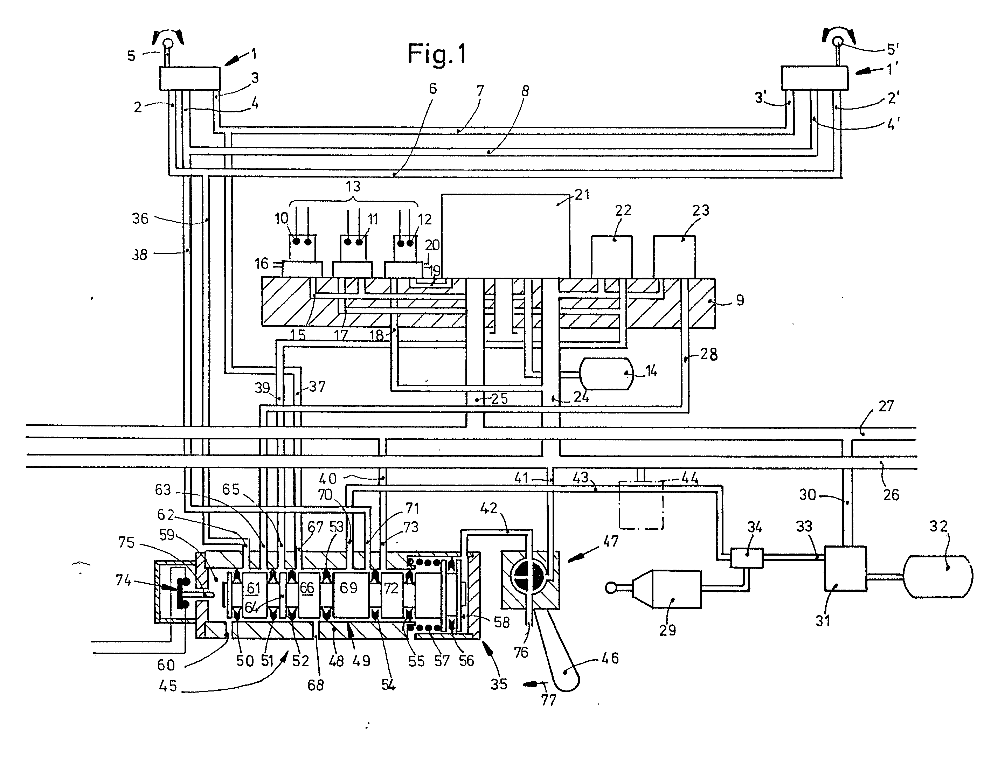

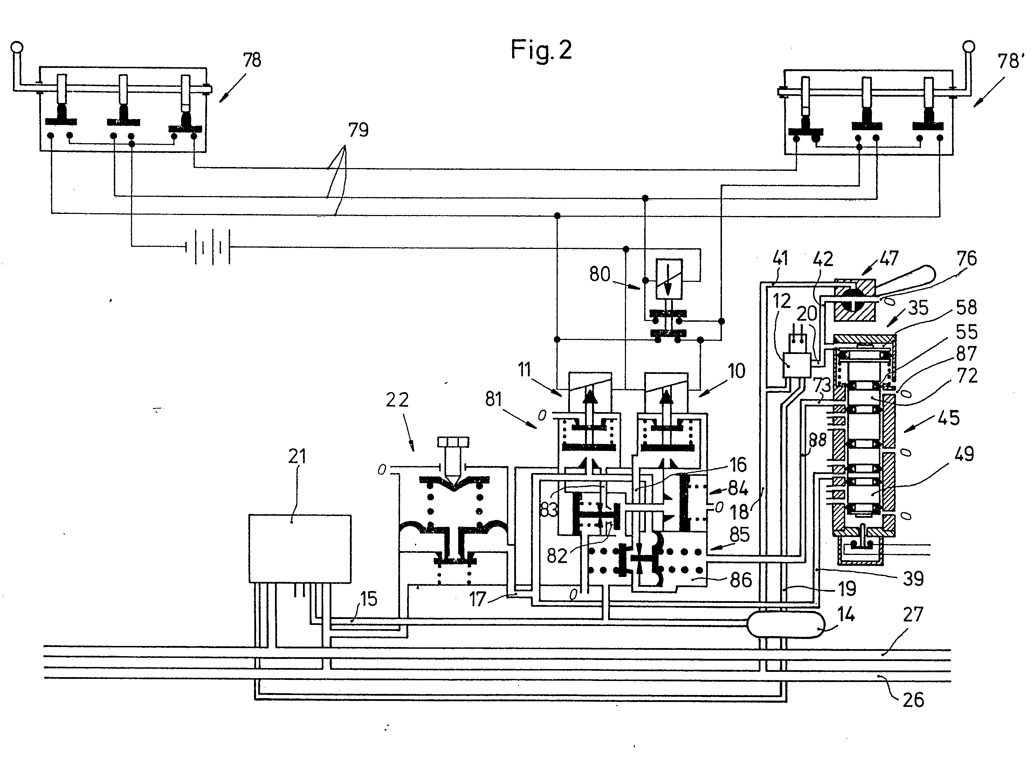

In den Zeichnungen Fig. 1 und 2 sind zwei Ausführungsbeispiele für nach der Erfindung ausgebildete Steuereinrichtungen dargestellt.

Gemäss Fig. 1 sind in einem Schienenfahrzeug zwei gleichartig zueinander ausgebildete Zusatzbremsventile 1 und 1' mit jeweils einem Druckluftspeiseanschluss 2 bzw. 2', einem Entlüftungsanschluss 3 bzw. 3' und einem Bremsdruckanschluss 4 bzw. 4' angeordnet. Die wie üblich ausgebildeten und daher in ihrem Aufbau hier nicht zu beschreibenden Zusatzbremsventile 1 und 1' weisen je einen Handhebel 5 bzw. 5' auf, der sich in Ruhestellung in einer Mittellage befindet und zum direkten Bremsen in einer, zum direkten Lösen in entgegengesetzter Richtung zu verstellen ist. Mittels Rohrleitungen 6, 7 bzw. 8 sind die einander entsprechenden Anschlüsse 2 und 2', 3 und 3' bzw. 4 und 4' der beiden Zusatzbremsventile 1 und 1' miteinander verbunden. Auf einer Schaltplatte 9 sind zwei Magnetventile 10 und 11 sowie ein Absperrmagnetventil 12 angeordnet, welche über Drahtleitungen 13 willkürlich oder automatisch gesteuert erregt werden können. Das Magnetventil 10 dient als Bremsmagnetventil, es sperrt bei seiner Erregung einen mit einem Steuerbehälter 14 verbundenen Kanal 15 der Schaltplatte 9 von einer Entlüftung 16 ab. Das Magnetventil 11 dient als Lösemagnetventil, bei seiner Erregung verbindet es einen als Druckluftquelle dienenden Kanal 17 mit dem Kanal 15. Das Absperrmagnetventil 12 ist aus einem Kanal 18 mit Druckluft versorgt, im Ruhezustand verbindet es einen Absperrkanal 19 mit einem Entlüftungsanschluss 20, bei Erregung dagegen sperrt es den Entlüftungsanschluss 20 ab und verbindet den Absperrkanal 19 mit dem Kanal 18. Weiterhin befinden sich auf der Schaltplatte 9 ein übliches Relaisventil 21 und zwei Druckbegrenzungsventile 22 und 23 als Druckluftquellen. Über zwei grossquerschnittige Rohrleitungen 24 und 25 ist das Relaisventil 21 durch die Schaltplatte 9 mit einer aus einer nicht dargestellten Druckluftquelle aufgeladenen Hauptbehälterleitung 26 und der Hauptluftleitung 27 verbunden. Der Steuereingang des Relaisventils 21 steht mit dem Kanal 15 und damit dem Steuerbehälter 14 in Verbindung; der bei seiner Druckentlastung ein Absperren der Hauptluftleitung 27 im Relaisventils 21 bewirkende Absperranschluss des Relaisventils 21 ist an den Absperrkanal 19 angeschlossen; der Kanal 18 sowie die Eingangsanschlüsse der beiden Druckbegrenzungsventile 22 und 23 stehen mit der an die Hauptbehälterleitung 26 angeschlossenen Rohrleitung 24 in Verbindung; der Kanal 17 ist an den Ausgangsanschluss des auf Regeldruckhöhe in der Hauptluftleitung 27 bei gelösten Bremsen, also beispielsweise 5 bar, eingestellten Druckbegrenzungsventils 22 angeschlossen; und das Druckbegrenzungsventil 23 speist in eine mit seinem Ausgangsanschluss verbundene Leitung 28 ständig eine auf den maximal in einen Bremszylinder 29 einspeisbaren Druck begrenzte Druckhöhe ein.

Von der Hauptluftleitung 27 führt eine Zweigleitung 30 zum Steuereingang eines Bremssteuerventils 31, das mit einem Bremsluftbehälter 32 verbunden ist und an dessen Bremsdruckausgang 33 ein Eingangsanschluss eines Doppelrückschlagventils 34 angeschlossen ist. Der Ausgangsanschluss des Doppelrückschlagventils 34 kann über ein in Fig. 1 nicht dargestelltes weiteres Relaisventil, mit dem Bremszylinder 29 in Verbindung stehen.

Weiterhin ist eine Umschaltvorrichtung 35 vorgesehen, zu welcher von den Rohrleitungen 6, 7 bzw. 8 ausgehende Zweigleitungen 36, 37 bzw. 38, eine mit dem Kanal 17 verbundene und damit dem vom Druckbegrenzungsventil 22 begrenzten Druck beaufschlagte Zweigleitung 39, die Leitung 28, eine von der Hauptluftleitung 27 abzweigende Zweigleitung 40, eine von der Hauptbehälterleitung 26 abzweigende Zweigleitung 41 und eine an den zweiten Eingangsanschluss des Doppelrückschlagventils 34 angeschlossene Rohrleitung 43 führen. In die Rohrleitung 43 kann, wie in Fig. 1 strichpunktiert angedeutet, ein Bremsdruck-Relaisventil 44 eingeordnet sein. Ein entsprechendes Bremsdruck-Relaisventil könnte auch zwischen dem Ausgangsanschluss des Doppelrückschlagventils 34 und dem Bremszylinder 29 angeordnet sein. Insoweit entspricht die Steuereinrichtung nach Fig. 1 in ihrem Aufbau und ihrer Funktion derjenigen nach der bereits erwähnten DE-B Nr. 2845311, so dass sich weitere Ausführungen hierzu erübrigen.

Die Umschaltvorrichtung 35 weist ein Rundschieberventil 45 und einen mittels eines Handhebels 46 willkürlich umschaltbaren Umstellhahn 47 auf. Das Rundschieberventil 45 beinhaltet einen in einem Gehäuse 48 in zwei Schaltstellungen einstellbaren Rundschieber 49. Der sechs als Dichtringe ausgebildete, benachbarte Dichtstellen 50 bis 55 aufweisende Rundschieber 49 ist an seinem gemäss Fig. 1 rechten Ende mit einem Kolben 56 verbunden, der in Verschieberichtung nach rechts von der Kraft einer Feder 57 und andererseits vom Druck in einem Raum 58 belastet ist. In der rechten, in Fig. 1 dargestellten und der Normal-Schaltstellung entsprechenden Schaltstellung des Rundschiebers 49 mündet in die erste, linksstirnseitige Kammer 59 eine von der ersten Dichtstelle 50 überschleifbare Entlüftung 60 ein.

In die benachbarte, zweite Kammer 61 mündet ständig eine über die Zweigleitung 36 mit dem Druckluftspeiseanschluss 2 bzw. 2' der Zusatzbremsventile 1 und 1' verbundene Einmündung 62 und eine von der zweiten Dichtstelle 51 überschleifbare, an die Leitung 28 angeschlossene Einmüdung 63 ein. Zwischen der zweiten und der dritten Dichtstelle 51 und 52 befindet sich eine dritte Kammer 64, in welche eine von der dritten Dichtstelle 52 überschleifbare Einmündung 65 einmündet, welche an die Zweigleitung 39 angeschlossen ist. In die anschliessende, zwischen den Dichtstellen 52 und 53 befindliche, vierte Kammer 66 mündet ständig eine über die Zweigleitung 37 mit den Entlüftungsanschlüssen 3, 3' der Zusatzbremsventile 1, 1' verbundene Einmündung 67 und, von der vierten Dichtstelle 53 überschleifbar, eine Entlüftung 68 ein. In die fünfte, zwischen den Dichtstellen 53 und 54 befindliche Kammer 69 mündet ständig eine an die Rohrleitung 43 angeschlossene Einmündung 70 und, von der fünften Dichtstelle 54 überschleifbar, eine über die Zweigleitung 38 mit den Bremsdruckanschlüssen 4, 4' der Zusatzbremsventile 1, 1' verbundene Einmündung 71 ein. In die von der sechsten Dichtstelle 55 abgeschlossene, sechste Kammer 72 mündet ständig eine über die Zweigleitung 40 mit der Hauptluftleitung 27 verbundene Einmündung 73 ein. Der die Feder 57 aufnehmende Raum ist ständig entlüftet. Am linken Ende des Rundschieberventils 45 befindet sich eine Schalteinrichtung 74, welche beim Umstellen des Rundschiebers 49 aus der dargestellten in die linke, der Not-Schaltstellung entsprechenden Lage über einen Stössel 75 schaltbar ist und dabei eine nicht dargestellte Anzeigeeinrichtung betätigt. Die Schalteinrichtung 74 kann, wie dargestellt, als elektrischer Schalter ausgebildet sein, sie kann jedoch auch ein pneumatisch schaltbares Ventil aufweisen.

Der Umstellhahn 47 ist als Dreiwegehahn ausgebildet, der in der dargestellten Normal-Schaltstellung eine in den Raum 58 einmündende Rohrleitung 42 mit einer Entlüftung 76, bei Umstellung der Handhebels 46 in Pfeilrichtung 77 in die Not-Schaltstellung dagegen unter Absperrung der Entlüftung 76 die Zweigleitung 41 mit der Rohrleitung 42 verbindet.

In der dargestellten Normal-Schaltstellung ist der Raum 58 über die Entlüftung 76 mit der Atmosphäre verbunden, im unerregten Zustand hält das Absperrmagnetventil 12 den Absperrkanal 19 entlüftet und das Relaisventil 21 somit abgesperrt; bei Erregung des Absperrmagnetventils 12 verbindet es den Absperrkanal 19 mit der Hauptbehälterleitung 26 als Druckluftquelle, so dass das Relaisventil 21 an die Hauptluftleitung 27 angeschlossen wird und deren Druckbeaufschlagung entsprechend dem im Steuerbehälter 14 herrschenden Druck steuert. Der Druck im Steuerbehälter 14 ist durch Erregen des Lösemagnetventils 11 durch Druckluftzuführung aus dem Kanal 17 steigerbar und durch Entregen des Bremsmagnetventils 10 durch Druckluftablass durch die Entlüftung 16 verringerbar. Parallel hierzu werden die Zusatzbremsventile 1 und 1' über das Druckbegrenzungsventil 23, die Leitung 28, die Kammer 61 und die Zweigleitung 36 mit Druckluft versorgt, die Entlüftungsanschlüsse 3, 3' stehen über die Zweigleitung 37 und den Raum 66 mit der Entlüftung 68 in Verbindung, und an die Bremsdruckanschlüsse 4, 4' ist über die Zweigleitung 38, die Kammer 69 und die Rohrleitung 43 das Doppelrückschlagventil 34 angeschlossen. Durch entsprechendes Betätigen der Zusatzbremsventile 1, 1' ist somit über das Doppelrückschlagventil 34 der Bremszylinder 29 direkt mit Druckluft beaufschlag- bzw. entlüftbar.

Über das Bremssteuerventil 31 ist durch entsprechende Druckeinsteuerung in die Hauptluftleitung 27 vermittels des Relaisventils 21 der Bremszylinder 29 entsprechend der indirekten Steuerung druckbeaufschlagbar und entlüftbar.

Bei Ausfall der Magnetventile 10 bis 12 gehen diese in den unerregten Schaltzustand über, das heisst das Bremsmagnetventil 10 öffnet sich und entlüftet den Kanal 15 durch die Entlüftung 16 in die Atmosphäre, das Lösemagnetventil 11 schliesst sich und sperrt die Kanäle 15 und 17 voneinander ab, und das Absperrmagnetventil 12 verbindet den Absperrkanal 19 unter Absperrung von Kanal 18 mit dem Entlüftungsanschluss 20. Durch Entlüftung des Absperrkanals 19 wird das Relaisventil 21 von der Hauptluftleitung 27 abgesperrt und kann auf deren Druckführung keinen Einfluss mehr nehmen; in der Hauptluftleitung 27 herrscht also eine unbestimmte Druckhöhe, welche über das Bremssteuerventil 31 eine ständige Druckluftbeaufschlagung des Bremszylinders 29 bewirken kann. Soll das Schienenfahrzeug und insbesondere dessen indirekte Bremssteuerung weiter betrieben werden, so ist der Umstellhahn 47 durch Umstellen des Handhebels 46 in die Not-Schaltstellung für die Umschaltvorrichtung 35 einzustellen, in welcher er die Entlüftung 76 absperrt und die Zweigleitung 41 mit der Rohrleitung 42 verbindet und somit den Raum 58 aus der Hauptbehälterleitung 26 mit Druckluft beaufschlagt. Der Kolben 56 wird daher entgegen der Kraft der Feder 57 gemäss Fig. 1 nach links gedrückt, wobei der Rundschieber 49 mitgenommen wird und mit seiner linken Stirnfläche über den Stössel 75 die Schalteinrichtung 74 zum Anzeigen der Einstellung der Not-Schaltstellung betätigt. Beim Verschieben des Rundschiebers 49 überschleifen dessen Dichtungen die vorstehend als überschleifbar angeführten Entlüftungen bzw. Einmündungen, so dass folgende Verbindungen entstehen: Die Einmündungen 62 und 63 werden voneinander getrennt und die Einmündung 62 wird mit der Entlüftung 60 verbunden; die Einmündung 63 mündet in die Kammer 64 und ist von weiteren Verbindungen abgeschlossen; die Einmündung 65 gelangt mit der Kammer 66 und damit der Einmündung 67 in Verbindung; die Entlüftung 68 wird von der Kammer 66 abgetrennt und gelangt über die Kammer 69 in Verbindung zur Einmündung 70; die Einmündung 71 wird von der Kammer 69 abgetrennt und gelangt über die Kammer 72 mit der Einmündung 73 in Verbindung. Durch den Schaltvorgang werden somit die Druckluftspeiseanschlüsse 2, 2' von ihrer Druckluftversorgung über das Druckbegrenzungsventil 23 abgesperrt und mit der Entlüftung 60 verbunden; die Entlüftungsanschlüsse 3, 3' werden von der Entlüftung 68 abgetrennt und aus dem Druckbegrenzungsventil 22 mit Druckluft versorgt; die Bremsdruckanschlüsse 4, 4' werden von der Rohrleitung 43 abgetrennt und über die Zweigleitung 40 mit der Hauptluftleitung 27 verbunden. Wird nunmehr ein Zusatzbremsventil 1, 1' wie zum direkten Bremsen in Bremsstellung bewegt, so bewirkt es über die Zweigleitung 40, die Kammer 72, die Zweigleitung 38, die Zweigleitung 36 und die Entlüftung 60 eine Entlüftung der Hauptluftleitung 27, so dass deren Druck absinkt und ein indirekt gesteuertes Einbremsen durch Druckbeaufschlagen des Bremszylinders 29 über das Bremssteuerventil 31 bewirkt; die Druckabsenkung in der Hauptluftleitung 27 bewirkt auch an mit dem Fahrzeug gekoppelten, weiteren Fahrzeugen ein indirekt gesteuertes Einbremsen. Zum Lösen der Bremsen kann über die Zusatzbremsventile 1 bzw. 1' durch deren Verstellen in Lösestellung eine Drucksteigerung in der Hauptluftleitung 27 bewirkt werden, wobei auf die Regeldruckhöhe in der Hauptluftleitung 27 begrenzte Druckluft aus dem Druckbegrenzer 22 durch die Zweigleitung 39, die Kammer 66, die Zweigleitung 37, die Zweigleitung 38, die Kammer 72 und die Zweigleitung 40 zur Hauptluftleitung 27 strömt. Somit ist weiterhin ein indirekt gesteuertes Bremsen und Lösen durch entsprechende Druckeinsteuerung in die Hauptluftleitung 27 möglich, wobei die Betätigungsrichtung der Zusatzbremsventile 1 und 1' jeweils gleich zu den Betätigungsrichtungen beim direkt gesteuerten Bremsen und Lösen ist.

Bei Wiederinbetriebnahme der Magnetventile 10 bis 12 wird der Umstellhahn 47 zurückgestellt, wobei durch Entlüften des Raumes 58 der Rundschieber 49 unter der Kraft der Feder 58 in die in Fig. 1 dargestellte Schaltstellung zurückbewegt wird. Damit ist wieder die Normal-Schaltstellung eingestellt.

Soll in der Not-Schaltstellung vermittels der Zusatzbremsventile 1, 1' die Steuerung des Hauptluftleitungsdruckes nicht unmittelbar oder über ein in Fig. 1 nicht dargestelltes, beispielsweise in die Zweigleitung 40 einzuordnendes, gesondertes Relaisventil erfolgen, sondern soll in der Not-Schaltstellung vermittels der Zusatzbremsventile 1, 1' das in seinem Aufbau unveränderte Relaisventil 21 ansteuerbar sein, welches dann seinerseits den Druck in der Hauptluftleitung 27 steuert, so ist die Steuereinrichtung, wie in Fig. 2 beispielsweise dargestellt, abzuändern. Einander entsprechende Teile sind in Fig. 1 und Fig 2 mit gleichen Bezugszeichen bezeichnet.

In der Fig. 2 sind Teile eines Führerbremsventils entsprechend der bereits eingangs erwähnten DE-B Nr. 3002001 gezeigt. An den Führerständen des Schienenfahrzeuges sind zusätzlich zu den in Fig. 2 nicht dargestellten Zusatzbremsventilen willkürlich betätigbare, elektrische Vorsteuereinrichtungen 78 bzw. 78' angeordnet, durch welche über Kabelverbindungen 79 die Erregung des Bremsmagnetventils 10 und/oder des Lösemagnetventils 11 steuerbar ist. Unter dem Bezugszeichen 80 ist ein zweipoliges Halterelais dargestellt. Weiterhin ist aus Fig. 2 das mit der Hauptbehälterleitung 26, der Hauptluftleitung 27 und über den Kanal 15 mit dem Steuerbehälter 14 verbundene Relaisventil 21, das auf die Regeldruckhöhe in der Hauptluftleitung 27 bei gelösten Bremsen eingestellte Druckbegrenzungsventil 22, der Kanal 17, und der Entlüftungsanschluss 16 des Bremsmagnetventils 10 ersichtlich. Das Bremsmagnetventil 10 sowie das Lösemagnetventil 11 sind zu einer Ventileinheit 81 zusammengefasst, in welcher das Lösemagnetventil 11 die Druckluftfüllung des Steuerbehälters 14 aus dem Kanal 17 über ein Absperrventil 82 überwacht, derart, dass bei unerregtem Lösemagnetventil 11 dem Steuerbehälter 14 eine entlüftete Kanalverbindung 83 vorgeordnet ist, wodurch eine ungewollte Drucksteigerung im Steuerbehälter 14 und ein damit verbundenes, ungewolltes Bremsenlösen ausgeschlossen ist. Zwischen dem Steuerbehälter 14 und dem Bremsmagnetventil 10 ist in der Ventileinheit 81 ein Durchgangsventil 84 eingeschaltet, welches eine Entlüftung des Steuerbehälters 14 durch das Bremsmagnetventil 10 zur Druckluftersparnis nur bis zu einer bestimmten Druckhöhe, welche jedoch das Einsteuern einer Vollbremsung gewährleistet, erlaubt. Der Entlüftungsanschluss 16 des Bremsmagnetventils 10 führt zu einem einem Stufenventil 85 zugehörenden Entlüftungsraum 86. Insoweit entspricht die Steuereinrichtung nach Fig. 2 dem Führerbremsventil nach Fig. 3 der erwähnten DE-B Nr. 3002001 und braucht daher hier weder in ihrem konstruktiven Aufbau noch in ihrer Funktionsweise weiter erläutert zu werden.

Weiterhin ist in Fig. 2 die Umschaltvorrichtung 35 mit dem Rundschieberventil 45 und seinem Rundschieber 49 sowie dem Umstellhahn 47 dargestellt. Das Rundschieberventil 45 entspricht mit der Ausnahme, dass in der Normal-Schaltstellung in die sechste Kammer 72 zusätzlich zur Einmündung 73 eine von der sechsten Dichtstelle 55 überschleifbare Entlüftung 87 einmündet, und dass die Einmündung 73 nicht an die Hauptluftleitung 27, sondern über eine Rohrleitung 88 ständig an den Entlüftungsraum 86 angeschlossen ist, dem Aufbau und der Verschaltung des Rundschieberventils 45 nach Fig. 1; die Verschaltung des Rundschieberventils 45 ist daher in Fig. 2 insoweit zum Vermeiden einer Unübersichtlichkeit nicht dargestellt und braucht auch nicht nochmals beschrieben zu werden. Das Absperrmagnetventil 12 ist aus der Hauptbehälterleitung 26 über den Kanal 18 und der Umstellhahn 47 über die weiterführende Zweigleitung 41 mit Druckluft versorgt; die Rohrleitung 42 verbindet den Umstellhahn 47 mit dem Raum 58 des Rundschieberventils 45 und zugleich, abweichend zu Fig. 1, mit dem Entlüftungsanschluss 20 des Absperrmagnetventils 12. Der Absperrkanal 19 verbindet, wie zu Fig. 1 beschrieben, das Absperrmagnetventil 12 mit dem Absperr-Steueranschluss des Relaisventils 21. Die Zweigleitung 39 führt von Kanal 17 zur Einmündung 65.

In der Normal-Schaltstellung hält die Entlüftung 76 des Umstellhahnes 47 zusätzlich zum Raum 58 den Entlüftungsanschluss 20 des Absperrmagnetventils 12 in Verbindung mit der Atmosphäre. Die Entlüftung 16 des Bremsmagnetventils 10 ist über den Entlüftungsraum 86, die Einmündung 73, die Kammer 72 und die Entlüftung 87 mit der Atmosphäre verbunden. Das Führerbremsventil und die Steuereinrichtung nach Fig. 2 arbeiten daher wie vorstehend zu Fig. 1 und wie in der DE-B Nr. 3002001 (siehe dort Fig. 3) beschrieben.

Beim Umstellen des Umstellhahnes 47 in die Not-Schaltstellung arbeitet das Rundschieberventil 45 wie zu Fig. 1 beschrieben, zusätzlich sperrt es jedoch die Kammer 72 und damit die Einmüdung 73 von der Entlüftung 87 ab, und zugleich wird aus der Zweigleitung 41 über den Umstellhahn 47 die Rohrleitung 42, den Entlüftungsanschluss 20 und das unerregte Absperrmagnetventil 12 der Absperrkanal 19 weiterhin mit Druckluft beaufschlagt, so dass das Relaisventil 21 an die Hauptluftleitung 27 angeschaltet und funktionsfähig bleibt. Über die in Fig. 2 nicht dargestellten Zusatzbremsventile bewirkte Drucksteuerungen gelangen, wie aus Fig. 1 ersichtlich, zur Einmündung 73 des Rundschieberventils 45 und von dort durch den Entlüftungsraum 86, die Entlüftung 16, das im unerregten Zustand geöffnete Bremsmagnetventil 10 und das geöffnete Durchgangsventil 84 zum Steuerbehälter 14 und Kanal 15 und bewirken über das Relaisventil 21 eine entsprechende Drucksteuerung für die Hauptluftleitung 27. Es ist somit also eine leistungsfähige Drucksteuerung für die Hauptluftleitung 27 vermittels der Zusatzbremsventile gegeben.

Die Umschaltvorrichtung 35 mit dem Rundschieberventil 45 und dem Umstellhahn 47 ist abweichend zur zeichnerischen Darstellung zweckmässig an die Schaltplatte 9 an- bzw. aufflanschbar auszubilden, wodurch die erforderlichen, pneumatischen Verbindungen in besonders einfacher Weise realisierbar sind. Es ist jedoch auch möglich, den Umstellhahn 47 getrennt vom Rundschieberventil 45 an einer gesonderten, gut zugänglichen Stelle des Fahrzeuges zu montieren und so eine einfache Bedienung sicherzustellen.

| | | | | | | |
|---|---|---|---|---|---|---|
| | | | Bezugszeichenliste | | | |
| 1, 1' | Zusatzbremsventil | 34 | Doppelrückschlagventil | 62 | Einmündung |
| 2, 2' | Druckluftspeiseanschluss | 35 | Umschaltvorrichtung | 63 | Einmündung |
| 3, 3' | Entlüftungsanschluss | 36 | Zweigleitung | 64 | Kammer |
| 4, 4' | Bremsdruckanschluss | 37 | Zweigleitung | 65 | Einmündung |
| 5, 5' | Handhebel | 38 | Zweigleitung | 66 | Kammer |
| 6, 7, 8 | Rohrleitung | 39 | Zweigleitung | 67 | Einmündung |
| 9 | Schaltplatte | 40 | Zweigleitung | 68 | Entlüftung |
| 10, 11 | Magnetventil | 41 | Zweigleitung | 69 | Kammer |
| 12 | Absperrmagnetventil | 42 | Rohrleitung | 70 | Einmündung |
| 13 | Drahtleitung | 43 | Rohrleitung | 71 | Einmündung |
| 14 | Steuerbehälter | 44 | Bremsdruck-Relaisventil | 72 | Kammer |
| 15 | Kanal | 45 | Rundschieberventil | 73 | Einmündung |
| 16 | Entlüftung | 46 | Handhebel | 74 | Schalteinrichtung |
| 17 | Kanal | 47 | Umstellhahn | 75 | Stössel |
| 18 | Kanal | 48 | Gehäuse | 76 | Entlüftung |
| 19 | Absperrkanal | 49 | Rundschieber | 77 | Pfeilrichtung |
| 20 | Entlüftungsanschluss | 50 | Dichtstelle | 78 | Vorsteuereinrichtung |
| 21 | Relaisventil | 51 | Dichtstelle | 79 | Kabelverbindung |
| 22, 23 | Druckbegrenzungsventil | 52 | Dichtstelle | 80 | Halterelais |
| 24, 25 | Rohrleitung | 53 | Dichtstelle | 81 | Ventileinheit |
| 26 | Hauptbehälterleitung | 54 | Dichtstelle | 82 | Absperrventil |
| 27 | Hauptluftleitung | 55 | Dichtstelle | 83 | Kanalverbindung |
| 28 | Leitung | 56 | Kolben | 84 | Durchgangsventil |
| 29 | Bremszylinder | 57 | Feder | 85 | Stufenventil |
| 30 | Zweigleitung | 58 | Raum | 86 | Entlüftungsraum |
| 31 | Bremssteuerventil | 59 | Kammer | 87 | Entlüftung |
| 32 | Bremsluftbehälter | 60 | Entlüftung | 88 | Rohrleitung |
| 33 | Bremsdruckausgang | 61 | Kammer | | |

## Patentansprüche

1. Elektropneumatische Steuereinrichtung für die Druckluftbremsen von Schienenfahrzeugen, mit den Druck in einem Steuerbehälter (14) steuernden, willkürlich schaltbaren Magnetventilen (10, 11), einem vom Druck im Steuerbehälter (14) entgegen dem Druck in einer Hauptluftleitung (27) gesteuerten, den Druck in der Hauptluftleitung (27) überwachenden Relaisventil (21), einem einen Druckluftspeiseanschluss (2, 2'), einen Entlüftungsanschluss (3, 3') und einen Bremsdruckanschluss (4, 4') aufweisenden Zusatzbremsventil (1, 1'), und einer Umschaltvorrichtung (35) mit drei gemeinsam schaltbaren Wechselventilen, die in ihrer Normal-Schaltstellung bzw. einer bei Ausfall der Magnetventile (10, 11) einzustellenden Not-Schaltstellung den Druckluftspeiseanschluss (2, 2') mit einer, ggf. druckbegrenzten, Druckluftquelle (Druckbegrenzungsventil 23) bzw. der Atmosphäre (Entlüftung 60), den Entlüftungsanschluss (3, 3') mit der Atmosphäre (Entlüftung 68) bzw. einer, ggf. druckbegrenzten, Druckluftquelle (Druckbegrenzungsventil 22) und den Bremsdruckanschluss (4, 4') direkt oder über ein Bremsdruck-Relaisventil (44) indirekt mit einem Bremszylinder (29) bzw. direkt oder über das Relaisventil (21) indirekt mit der Hauptluftleitung (27) verbinden, dadurch gekennzeichnet, dass die drei Wechselventile zu einem Rundschieberventil (45) mit einem gemeinsamen, in einem Gehäuse (48) in zwei Schaltstellungen einstellbaren Rundschieber (49) zusammengefasst sind, wobei der Rundschieber (49) durch einen Kolben (56) bewegbar ist, dessen Druckluftbeaufschlagung willkürlich vermittels eines Umstellhahnes (47) steuerbar ist.

2. Steuereinrichtung nach Anspruch 1, dadurch gekennzeichnet, dass der Kolben (56) in Verschieberichtung des Rundschiebers (49) zur Notschaltstellung entgegen der Kraft einer Feder (57) druckluftbeaufschlagbar ist.

3. Steuereinrichtung nach Anspruch 1 oder 2, dadurch gekennzeichnet, dass das Rundschieberventil (45) eine in der Not-Schaltstellung eine Anzeigevorrichtung betätigende Schalteinrichtung (74) aufweist.

4. Steuereinrichtung nach Anspruch 2 oder 3, dadurch gekennzeichnet, dass der Rundschieber (49) sechs Dichtstellen (50-55) aufweist, die im Zusammenwirken mit dem Gehäuse (48) sechs benachbarte Kammern (59, 61, 64, 66, 69 und 72) bilden, wobei in der Normal-Schaltstellung die erste, stirnseitige Kammer (59) mit einer von der ersten Dichtstelle (50) überschleifbaren Entlüftung (60), die zweite Kammer (61) ständig mit einer an den Druckluftspeiseanschluss (2, 2') des Zusatzbremsventils (1, 1') angeschlossenen Einmündung (62) und einer von der zweiten Dichtstelle (51) überschleifbaren, aus einer der Druckluftquellen (Druckbegrenzungsventil 23), welche ggf. auf den maximalen Bremszylinderdruck geregelt ist, gespeisten Einmündung (63), die dritte Kammer (64) mit einer von der dritten Dichtstelle (52) überschleifbaren, aus der anderen, ggf. auf die Regeldruckhöhe in der Hauptluftleitung (27) geregelten, Druckluftquelle (Druckbegrenzungsventil 22) gespeisten Einmündung (65), die vierte Kammer (66) ständig mit einer an den Entlüftungsanschluss (3, 3') des Zusatzbremsventils (1, 1') angeschlossenen Einmündung (67) und einer von der vierten Dichtstelle (53) überschleifbaren Entlüftung (68), die fünfte Kammer (69) ständig mit einer direkt oder indirekt an den Bremszylinder (29) angeschlossenen Einmündung (70) und einer von der fünften Dichtstelle (54) überschleifbaren, an den Bremsdruckanschluss (4, 4') des Zusatzbremsventils (1, 1') angeschlossenen Einmündung (71) und die sechste, von der sechsten Dichtstelle (55) begrenzte Kammer (72) ständig mit einer direkt oder indirekt an die Hauptluftleitung (27) angeschlossenen Einmündung (73) verbunden ist.

5. Steuereinrichtung nach Anspruch 2, 3 oder 4, mit einem Relaisventil (21) mit Absperrmöglichkeit durch Entlüften einer in ihrer Druckführung durch ein Absperrmagnetventil (12) mit Entlüftung (20) überwachten Absperrleitung (Absperrkanal 19), dadurch gekennzeichnet, dass die Entlüftung (Entlüftungsanschluss 20) des Absperrmagnetventils (12) gemeinsam mit dem Druckluftbeaufschlagungsraum (Raum 58) für den Kolben (56) vermittels des Umstellhahnes (47) in dessen der Normal-Schaltstellung entsprechender Schaltstellung mit der Atmosphäre (Entlüftung 76), in der Not-Schaltstellung entsprechender Schaltstellung mit einer Druckluftquelle (Hauptbehälterleitung 26) verbunden ist (Fig. 2).

6. Steuereinrichtung nach Anspruch 5, wobei der Steuerbehälter (14) über ein den Magnetventilen (10, 11) zugehörendes Lösemagnetventil (11) mit einer, ggf. auf die Regeldruckhöhe in der Hauptluftleitung (27) begrenzten, Druckluftquelle (Druckbegrenzungsventil 22) und über ein ebenfalls den Magnetventilen (10, 11) zugehörendes Bremsmagnetventil (10) mit einer Entlüftung (16) verbindbar ist, dadurch gekennzeichnet, das die Entlüftung (16) mit der ständig an die sechste Kammer (72) des Rundschieberventils (45) angeschlossenen Einmündung (73) verbunden ist, und dass die sechste Dichtstelle (55) eine in der Normal-Schaltstellung in die sechste Kammer (72) einmündende Entlüftung (87) zu überschleifen vermag (Fig. 2).

7. Steuereinrichtung nach den Ansprüchen 4 und 6, dadurch gekennzeichnet, dass das Lösemagnetventil (11) und die aus der auf Regeldruckhöhe in der Hauptluftleitung (27) geregelte Druckluftquelle gespeiste Einmündung (65) an einen gemeinsamen Druckbegrenzer (Druckbegrenzungsventil 22) angeschlossen sind.

## Claims

1. Electropneumatic control device for the compressed air brakes of rail vehicles, with solenoid valves (10, 11), which can be switched arbitrarily, controlling the pressure in a control cylinder (14); a relay valve (21), controlled by the pressure in the control cylinder (14) against the pressure in a main air line (27), monitoring the pressure in the main air line (27); an additional brake valve (1, 1'), having a compressed air feed connection (2, 2'), a venting connection (3, 3') and a brake pressure connection (4, 4'); and a switch-over device (35) with three jointly switchable spool valves, which, in their normal switching-position, or in an emergency switching-position to be set in the case of failure of the solenoid valves (10, 11), link the compressed air feed connection (2, 2') with a — if necessary pressure-limited — compressed air source (pressure-limiting valve 23) or with the atmosphere (vent 60), the venting connection (3, 3') with the atmosphere (vent 68) or with a — if necessary pressure-limited — compressed air source (pressure-limiting valve 22); and the brake pressure connection (4, 4') directly or indirectly via a brake pressure relay valve (44) with a brake cylinder (29), or directly or indirectly via the relay valve (21) with the main air line (27); characterized in that the three spool valves are combined into a tubular slide valve (45) with a joint tubular slide (49) which can be set in two switching-positions in a housing (48), the tubular slide (49) being moveable through a piston (56), whose compressed air admission is arbitrarily controllable by means of a shift cock (47).

2. Control device according to Claim 1, characterized in that the piston (56) can admit compressed air in the displacement direction of the tubular slide (49) to the emergency switching-position against the force of a spring (57).

3. Control device according to Claim 1 or 2, characterized in that the tubular slide valve (45) has a switching device (74) operating an indicator arrangement in the emergency switching-position.

4. Control device according to Claim 2 or 3, characterized in that the tubular slide (49) has six sealing places (50-55) which form, in combined action with the housing (48), six neighbouring chambers (59, 61, 64, 66, 69 and 72), with which, in the normal switching-position, the first chamber on the front (59) is linked with a vent (60) over which the first sealing place (50) can slide; the second chamber (61) [is linked] constantly with a junction (62) connected to the compressed air feed connection (2, 2') of the additional brake valve (1, 1') and with a junction (63), over which the second sealing place (51) can slide, fed from one of the compressed air sources (pressure-limited valve 23), which is regulated if necessary to the maximum brake cylinder pressure; the third chamber (64) [is linked] with a junction (65), over which the third sealing place (52) can slide, fed from the other compressed air source (pressure-limiting valve 22), regulated if necessary to the regulating pressure head in the main air line (27); the fourth chamber (66) [is linked] constantly with a junction (67) connected to the de-aeration connection (3, 3') of the additional brake valve (1, 1') and with a vent (68) over which the fourth sealing place (53) can slide; the fifth chamber (69) [is linked] constantly with a junction (70) connected directly or indirectly to the brake cylinder (29) and with a junction (71), over which the fifth sealing place (54) can slide, connected to the brake pressure connection (4, 4') of the additional brake valve (1, 1'); and the sixth chamber (72), limited by the sixth sealing place (55) [is linked] constantly with a junction (73) connected directly or indirectly to the main air line (27).

5. Control device according to Claim 2, 3 or 4, with a relay valve (21) with cut-off possibility through venting of a cut-off line (cut-off channel 19), monitored in its pressure guidance through a cut-off solenoid valve (12) with vent (20), characterized in that the vent (venting connection 20) of the cut-off solenoid valve (12), jointly with the compressed air admission space (space 58) for the piston (56), is, by means of the shift cock (47), linked in the latter's [the switch cock's] switching-position corresponding to the normal switching-position with the atmosphere (vent 76); [and] in the switching-position corresponding to the emergency switching-position with a compressed air source (main container line 26) (fig. 2).

6. Control device according to Claim 5, with which the control cylinder (14) can be linked, via a release solenoid valve (11) belonging to the solenoid valves (10, 11), with a compressed air source (pressure-limiting valve 22) — limited if necessary to the regulating pressure head in the main air line (27); and via a brake valve (10) belonging likewise to the solenoid valves (10, 11), with a vent (16), characterized in that the vent (16) is linked with the junction (73) constantly connected to the sixth chamber (72) of the tubular slide valve (45); and in that the sixth sealing place (55) can slide over a vent (87) joining, in the normal switching-position, into the sixth chamber (72) (fig. 2).

7. Control device according to Claims 4 and 6, characterized in that the release solenoid valve (11) and the junction (65), fed from the compressed air source regulated to the regulating pressure head in the main air line (27), are connected to a joint pressure limiter (pressure-limiting valve 22).

## Revendications

1. Dispositif de commande électropneumatique pour freins à air comprimé de véhicules sur rails, comportant des électrovannes (10, 11) susceptibles d'être branchées intentionnellement et réglant la pression dans un réservoir de commande (14), une soupape de relais (21) commandée par la pression qui règne dans le réservoir de commande, à l'encontre de la pression qui règne dans la conduite principale (27), et contrôlant la pression qui règne dans cette dernière, un robinet de freinage supplémentaire (1, 1') pourvu d'un raccord d'alimentation en air comprimé (2, 2'), un raccord de mise à l'atmosphère (3, 3') et un raccord de pression de freinage (4, 4'), et comportant un dispositif de commutation (35) pourvu de trois soupapes à deux voies susceptibles d'être commandées en commun, et qui, dans leur position de commutation normale ou dans une position de commutation d'urgence à régler en cas de défaillance des électrovannes (10, 11), relient le raccord d'alimentation en air comprimé (2, 2'), à une source d'air comprimé (soupape de limitation de la pression 23), éventuellement à pression limitée, ou à l'atmosphère (désaération 60), relient le raccord de mise à l'atmosphère (3, 3') à l'atmosphère ou à une source d'air comprimé (soupape de limitation de pression 22), éventuellement à pression limitée, et relient le raccord de la pression de freinage (4, 4'), directement ou par l'intermédiaire d'une soupape de relais (44) de la pression de freinage, indirectement à un cylindre de frein (29) ou directement ou par l'intermédiaire de la soupape de relais indirectement à la conduite d'air principalement (27), caractérisé par le fait que les trois soupapes à deux voies sont rassemblées en une soupape à tiroir rond (45) pourvue d'un tiroir rond commun (49) réglable dans un carter (48) dans deux positions de commutation, le tiroir rond (49) étant susceptible d'être déplacé par un piston (56) dont la charge en air comprimé est susceptible d'être commandée intentionnellement à l'aide d'un robinet de commutation (47).

2. Dispositif de commande selon la revendication 1, caractérisé par le fait que le piston (56) est susceptible d'être chargé en air comprimé dans le sens du déplacement du tiroir rond (49) vers la position d'urgence, à l'encontre de la force d'un ressort (57).

3. Dispositif de commande selon l'une des revendications 1 ou 2, caractérisé par le fait que la soupape à tiroir rond (45) comporte un dispositif de commutation (74) actionnant un dispositif d'affichage, dans la position de commutation d'urgence.

4. Dispositif de commande selon l'une des revendications 2 ou 3, caractérisé par le fait que le tiroir rond (49) comporte quatre points d'étanchéité (50-55) qui, en coopération avec le carter (48), constituent six chambres voisines (59, 61, 64, 66, 69 et 72), la réalisation étant telle que, dans la position de commutation normale, la première chambre frontale est reliée à une désaération (60) sur laquelle peut passer le premier point d'étanchéité (50), la seconde chambre (61) est reliée en permanence à une embouchure (62) reliée au raccord d'alimentation en air comprimé (2, 2') du robinet de freinage supplémentaire (1, 1') et à une embouchure (63) sur laquelle peut passer le second point d'étanchéité (53) et alimentée par l'une des sources d'air comprimé (soupape de limitation de pression 23) qui est éventuellement à la pression maximale du cylindre de frein, la troisième chambre (64) est reliée à une embouchure (65) sur laquelle peut passer le troisième point d'étanchéité (52) et alimentée par l'autre source d'air comprimé (soupape de limitation de pression 22) qui est éventuellement réglée au niveau de la pression qui règne dans la conduite principale (27), la quatrième chambre (66) est reliée en permanence à une embouchure (67) reliée au raccord de désaération (3, 3') de la soupape de freinage supplémentaire (1, 1') et à une désaération (68) sur laquelle peut passer le quatrième point d'étanchéité (53), la cinquième chambre (69) est reliée en permanence à une embouchure (70) reliée directement ou indirectement au cylindre de frein (29) et à une embouchure (71) reliée au raccord de la pression de freinage (4, 4') du robinet de freinage supplémentaire (1, 1') sur laquelle peut passer le cinquième point d'étanchéité (54), et la sixième chambre (72), qui est limitée par le sixième point d'étanchéité (55), est reliée en permanence à une embouchure (73) reliée directement ou indirectement à la conduite principale.

5. Dispositif de commande selon l'une des revendications 2, 3 ou 4, comportant une soupape de relais (21) avec possibilité de fermeture par désaération d'une conduite de fermeture (canal de fermeture 19) contrôlée du point de vue de sa pression par une électrovanne de fermeture (12), caractérisé par le fait que la désaération (raccord de désaération 20) de l'électrovanne de fermeture (12) est reliée, en commun avec la chambre de charge en air comprimé (chambre 58) pour le piston (56), à l'aide du robinet de commutation (47) et, pour la position de commutation qui correspond à la position de commutation normale de ce dernier, avec l'atmosphère (désaération 76), et à une source d'air comprimé (conduite du réservoir principal 26) dans la position de commutation qui correspond à la position de commutation d'urgence dudit robinet (fig. 2).

6. Dispositif de commande selon la revendication 5, dans lequel le réservoir de commande (14) est relié, par l'intermédiaire d'une électrovanne de desserrage (11) appartenant aux électrovannes (10, 11), à une source d'air comprimé (soupape de limitation de la pression 22), limitée éventuellement au niveau de la pression réglée dans la conduite principale (27), et à une désaération (16), par l'intermédiaire d'une électrovanne de freinage (10) appartenant également aux électrovannes (10, 11), caractérisé par le fait que la désaération (16) est reliée à l'embouchure (73) qui est reliée en permanence à la sixième chambre (72) de la soupape à tiroir rond (45), et que le second point d'étanchéité (55) est capable de passer sur une désaération (87) qui débouche, dans la sixième chambre (72), dans la position de commutation normale (fig. 2).

7. Dispositif de commande selon les revendications 4 et 6, caractérisé par le fait que l'électrovanne de desserrage (11) et l'embouchure (65), alimentées par la soupape d'air comprimé qui est réglée au niveau de la pression qui règne dans la conduite principale (27), sont reliées à un limiteur commun de pression (soupape de limitation de la pression 22).

Fig.1

Fig.2